# EUROPÄISCHE PATENTSCHRIFT

(11) **EP 3 165 067 B1**
(45) Veröffentlichungstag und Bekanntmachung des Hinweises auf die Patenterteilung: **20.06.2018**
(21) Anmeldenummer: 16401081.1
(22) Anmeldetag: 02.11.2016
(51) Int. Cl.: A01C 17/00, A01C 21/00

(54) **VERFAHREN ZUM AUSBRINGEN VON DÜNGER MIT EINEM SCHLEUDERSTREUER**
METHOD FOR DISTRIBUTING FERTILIZER WITH A CENTRIFUGAL SPREADER
PROCÉDÉ D'ÉPANDAGE D'ENGRAIS À L'AIDE D'UN ÉPANDEUR CENTRIFUGE

(30) Priorität: 06.11.2015 DE 102015119074
(43) Veröffentlichungstag der Anmeldung: 10.05.2017
(73) Patentinhaber: Amazonen-Werke H. Dreyer GmbH & Co. KG, 49205 Hasbergen (DE)
(72) Erfinder: Dreyer, Justus, 49076 Osnabrück (DE); Johannaber, Stefan Jan, 49536 Lienen (DE); Kleine-Hartlage, Hubertus, 49186 Bad Iburg (DE); Rahe, Florian, 49504 Lotte (DE)

(56) Entgegenhaltungen:
- DE-A1-102009 051 972
- DE-A1-102014 103 968

## Beschreibung

Die Erfindung betrifft ein Verfahren zum Ausbringen von Dünger mit einem Schleuderstreuer gemäß Oberbegriff des Anspruchs 1, wie bekannt aus DE 10 2014 103 968 A1, und einen Schleuderstreuer.

Wie beispielsweise aus der EP 1 692 929 A1 bekannt ist, werden für den normalen Düngeraustrag mit einem Schleuderstreuer Feldfahrgassen im Feldinneren abstandsgleich angelegt. Die Fahrgassen sind an ihren Enden durch ein Vorgewende miteinander verbunden. Im Feldinneren wird mit einem Normalstreubild vorgegebener Arbeitsbreite entsprechend dem regelmäßigen Abstand zwischen den Feldfahrgassen gearbeitet.

Ferner werden am Rand des zu bearbeitenden Feldes Grenzfahrgassen angelegt, die beispielsweise zu Beginn des Düngeraustrags abgefahren werden. Beim Befahren von Grenzfahrgassen, die vorzugsweise auch um das Vorgewende herum verlaufen, wird mit einem Grenzstreubild gearbeitet, das nur auf seiner der jeweiligen Feldgrenze zugewandten äußeren Seite eine steil abfallende Streuflanke aufweist, so dass möglichst wenig Dünger über die Feldgrenze hinaus gestreut wird. Zum Feldinneren hin wird dagegen mit einer Streuflanke des Normalstreubilds gearbeitet.

Gemäß EP 1 692 929 A1 kann ein solches asymmetrisches Streubild auch beim Befahren des Vorgewendes verwendet werden. Zusätzlich werden dort Ein- und Ausschaltzeitpunkte für Dosierungsorgane am Schleuderstreuers beim Wenden zugunsten einer gleichmäßigen Düngerverteilung optimiert.

Die EP 2 417 848 A2 offenbart ferner eine gezielte Anpassung des Streubilds beim Befahren von Grenzfahrgassen und daran gegebenenfalls keilförmig anschließender Fahrgassen ausschließlich in den jeweils der Feldgrenze zugewandten Streuflanken.

Problematisch ist, dass trotz derartiger Maßnahmen häufig Bereiche mit Unterdüngung auftreten mit der Folge eines unerwünschten Minderertrags, insbesondere im Bereich von Vorgewenden, die an eine quer dazu verlaufende Grenzfahrgasse anschließen.

Es besteht daher der Bedarf für einen möglichst gleichmäßigen Austrag von Dünger im Überlappungsbereich von Vorgewende und Grenzfahrgasse, insbesondere zur Vermeidung lokaler Unterdüngung.

Die gestellte Aufgabe wird mit einem Verfahren gemäß Anspruch 1 gelöst. Demnach dient dieses zum Ausbringen von Dünger mit einem Schleuderstreuer, wobei beim normalen Befahren abstandsgleicher Feldfahrgassen im Feldinneren mit einem Normalstreubild einer vorgegebenen Arbeitsbreite gearbeitet wird, und wobei ferner eine Grenzfahrt entlang eines Vorgewendes ausgeführt wird. Erfindungsgemäß arbeitet man bei der Grenzfahrt mit einem Grenzstreubild, das sich in einer zum Feldinneren weisenden inneren Grenzstreuflanke vom Normalstreubild hinsichtlich der Querverteilung des Düngers unterscheidet.

Dadurch kann der Düngeraustrag in einem Überlappungsbereich mit dem Vorgewende an den Abstand zu benachbarten Vorgewende-Fahrspuren angepasst werden, insbesondere unabhängig von einer der Feldgrenze zugewandten äußeren Grenzstreuflanke des Grenzstreubilds. Unterdüngung im Vorgewende lässt sich so gezielt reduzieren oder gar ganz vermeiden.

Vorzugsweise wird mit einem Zweischeibenstreuer mit im Abwurfbereich voneinander weg drehenden Streuscheiben gearbeitet. Unter unterschiedlichen Querverteilungen sind qualitativ unterschiedliche Verläufe der Streumenge quer zur Fahrtrichtung zu verstehen, im Gegensatz zu einer vertikalen Spreizung oder Stauchung von Streubildern durch Änderung der Streumenge.

Erfindungsgemäß wird eine Streuflanke des Normalstreubilds zum Erzeugen der inneren Grenzstreuflanke trapezförmig verzerrt. Darunter ist zu verstehen, dass eine im Wesentlichen dreieckige oder nur schwach trapezförmige Querverteilung des Düngers im Normalstreubild für das Grenzfahren in der inneren Grenzstreuflanke zugunsten einer trapezförmigeren Querverteilung umverteilt wird. Dadurch kann ein vergleichsweise scharf abgegrenzter Feldstreifen innerhalb der Grenzfahrgasse ausreichend mit Dünger versorgt werden, so dass in diesem Feldstreifen kein oder nur wenig zusätzlicher Düngeraustrag beim Befahren von Vorgewende-Fahrspuren erforderlich ist.

Das Normalstreubild hat zugunsten einer gleichmäßigen und stabilen Düngerverteilung beim normalen Anschlussfahren im Feldinneren meist eine im Wesentlichen dreieckige Querverteilung. Es hat sich demgegenüber überraschenderweise herausgestellt, dass im Bereich von Vorgewenden eine trapezförmige Querverteilung in der inneren Grenzstreuflanke vorteilhaft ist.

Vorzugsweise wird eine Streuflanke des Normalstreubilds zum Erzeugen der inneren Grenzstreuflanke quer gespreizt. Dadurch kann eine innere Teilarbeitsbreite beim Grenzfahren gezielt einseitig vergrößert werden, insbesondere ohne die äußere Grenzstreuflanke zu beeinflussen.

Vorzugsweise wird eine im seitlichen Abstand von 50% der Arbeitsbreite definierte Streumenge ausgehend von einer Streuflanke des Normalstreubilds in der inneren Grenzstreuflanke erhöht, insbesondere um wenigstens 20%. Dies führt zu einer effektiven trapezförmigen Streuflanke, insbesondere bei einer Erhöhung um wenigstens 50%.

Vorzugsweise wird dabei ferner eine im seitlichen Abstand von 10% der Arbeitsbreite definierte Streumenge ausgehend von einer Streuflanke des Normalstreubilds in der inneren Grenzstreuflanke erhöht. Dadurch kann die Düngermenge zur Vermeidung von Unterdüngung unmittelbar an der Grenzfahrgasse angepasst werden.

Vorzugsweise wird die innere Grenzstreuflanke bei der Grenzfahrt laufend an den Abstand zwischen einer dabei befahrenen Grenzfahrgasse und einer benachbarten Vorgewende-Fahrspur und/oder die Richtung der Vorgewende-Fahrspur angepasst. Dazu eignen sich beispielsweise eine entsprechende Variation der Teilarbeitsbreite der inneren Grenzstreuflanke und/oder eine Variation der relativen Streumenge im Abstand von 50% der vorgegebenen Arbeitsbreite. Zusätzlich ist eine entsprechende Variation der Düngerdosierung möglich.

Folglich lässt sich auf der Innenseite der Grenzfahrgasse ein optimierter, im Wesentlichen wellenförmiger Überlappungsbereich mit dem Vorgewende herstellen, der vorzugsweise einen festen räumlichen Versatz zu den Vorgewende-Fahrspuren aufweist.

Gemäß einem ersten vorteilhaften Teilaspekt wird ein Aufgabepunkt für den Dünger auf einer der inneren Grenzstreuflanke zugeordneten Streuscheibe ausgehend vom normalen Befahren der Feldfahrgassen in der Drehrichtung der Streuscheibe zum Erzeugen der inneren Grenzstreuflanke verstellt. Dies gilt für Schleuderstreuer deren Scheiben sich im hinteren Bereich voneinander weg drehen und ermöglicht eine besonders effektive trapezförmige Verzerrung des Normalstreubilds.

Der Aufgabepunkt ist beispielsweise als geometrischer Schwerpunkt einer Dosierungsöffnung zu verstehen, durch die der Dünger eingeleitet wird und auf die Streuscheibe fällt. Die Dosierungsöffnung ist Bestandteil eines Einleitsystems, das um die Drehachse der Streuscheibe gesteuert geschwenkt werden kann.

Gemäß einem zweiten vorteilhaften Teilaspekt wird die Drehzahl einer der inneren Grenzstreuflanke zugeordneten Streuscheibe ausgehend vom normalen Befahren der Feldfahrgassen zum Erzeugen der inneren Grenzstreuflanke erhöht.

Gemäß einem dritten vorteilhaften Teilaspekt wird die Dosierung des Düngers an einer der inneren Grenzstreuflanke zugeordneten Streuscheibe ausgehend vom normalen Befahren der Feldfahrgassen zum Erzeugen der inneren Grenzstreuflanke erhöht. Dies ist insbesondere in Verbindung mit einem Verstellen des Aufgabepunkts besonders effektiv.

Gemäß einem vierten vorteilhaften Teilaspekt wird wenigstens eine Streuschaufel an einer der inneren Grenzstreuflanke zugeordneten Streuscheibe ausgehend vom normalen Befahren der Feldfahrgassen zum Erzeugen der inneren Grenzstreuflanke verstellt oder selektiv zugeschaltet. Beispielsweise kann der Anstellwinkel einer Streuschaufel gesteuert verstellt werden. Ebenso kann eine gesteuert schaltbare Weiche vorhanden sein, die den Dünger zum Erzeugen der inneren Grenzstreuflanke auf eine bestimmte Streuschaufel lenkt und diese dadurch zuschaltet.

Vorzugsweise wird das Grenzstreubild automatisch mittels GPS-Steuerung eingestellt. Mithilfe zuvor abgelegter Ortsdaten des zu bearbeitenden Felds und der anhand GPS-Daten ermittelten Fahrtrichtung ist eine besonders exakte und reproduzierbare Anpassung des Grenzstreubilds möglich.

Die gestellte Aufgabe wird ebenso mit einem Schleuderstreuer für Dünger gemäß Anspruch 10 gelöst. Der Schleuderstreuer umfasst zwei mittels eines Bordcomputers getrennt einstellbare Schleuderscheibeneinheiten und ein GPS-System. Mittels des Bordcomputers können ein erster Betriebszustand zum Erzeugen eines Normalstreubilds für normales Befahren innerer Feldfahrgassen und wenigstens ein zweiter Betriebszustand zum Erzeugen eines Grenzstreubilds für ein Befahren von Grenzfahrgassen entlang eines Vorgewendes aktiviert werden. Ferner ist der Bordcomputer dazu ausgebildet, das Grenzstreubild anhand empfangener GPS-Daten und durch Ansteuern der dem Feldinneren zugewandten Schleuderscheibeneinheit gemäß wenigstens einer der vorigen Ausführungsformen des Verfahrens einzustellen.

Die Schleuderscheibeneinheiten umfassen jeweils separat ansteuerbare Schleuderscheiben und Einleitsysteme mit Dosierungsorganen.

Vorzugsweise umfassen die Schleuderscheibeneinheiten Einleitsysteme, die sich vom Bordcomputer gemäß dem ersten vorteilhaften Teilaspekt ansteuern lassen.

Vorzugsweise umfassen die Schleuderscheibeneinheiten Schleuderscheiben, deren Antriebseinheit sich vom Bordcomputer gemäß dem zweiten vorteilhaften Teilaspekt ansteuern lässt.

Vorzugsweise umfassen die Schleuderscheibeneinheiten Dosierungsorgane für den Dünger, die sich vom Bordcomputer gemäß dem dritten vorteilhaften Teilaspekt ansteuern lassen.

Vorzugsweise sind an den Schleuderscheiben Schleuderschaufeln ausgebildet, die sich vom Bordcomputer gemäß dem vierten vorteilhaften Teilaspekt ansteuern lassen.

Bevorzugte Ausführungsformen sind in den Zeichnungen dargestellt. Es zeigen:
- Fig. 1: eine schematische Draufsicht auf ein Feld mit einem Schleuderstreuer;
- Fig. 2: eine schematische Draufsicht auf einen Schleuderstreuer;
- Fig. 3A und 3B: Querverteilungen von Streubildern im Vergleich; und
- Fig. 4: eine schematische Draufsicht auf ein Vorgewende.

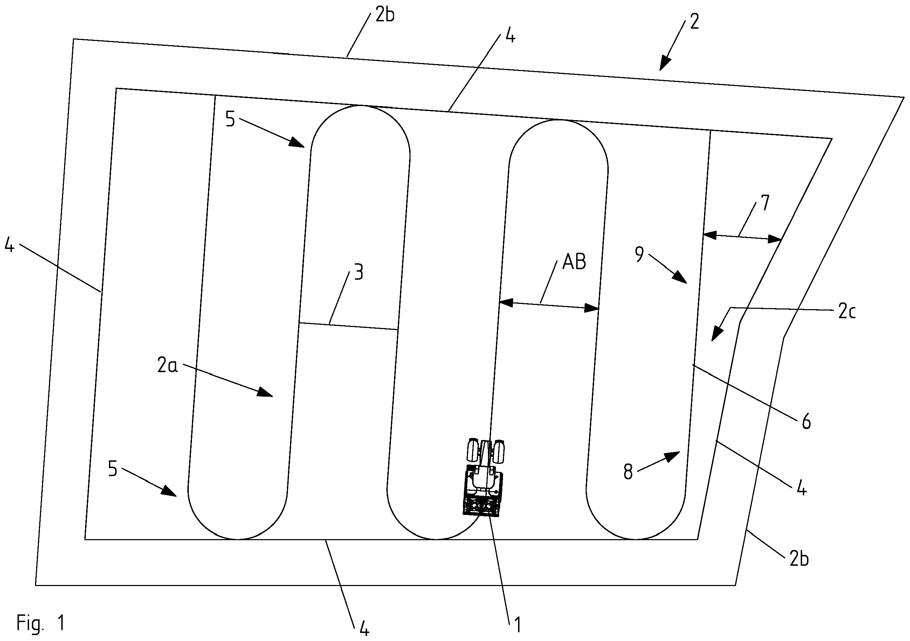

Wie die Fig. 1 erkennen lässt, sind auf einem mit einem Schleuderstreuer 1 zu bearbeitenden Feld 2 in bekannter Weise innere Feldfahrgassen 3 im Feldinneren 2a, eine äußere Grenzfahrgasse 4 entlang der Feldgrenze 2b, zwei Vorgewende 5 und eine seitliche Anschlussfahrspur 6 in einem Randbereich 2c des Felds 2 entlang der Grenzfahrgasse 4 angelegt.

Die Feldfahrgassen 3 sind mit einem einheitlichen Abstand zueinander angelegt, der einer für das normale Befahren der Feldfahrgassen 3 vorgegebenen Arbeitsbreite AB entspricht. Der Abstand 7 zwischen der Grenzfahrgasse 4 und der Anschlussfahrspur 6 ist kleiner als die Arbeitsbreite AB und kann entlang eines als Parallelfahrspur 8 ausgebildeten Abschnitts der Anschlussfahrspur 6 konstant sein und/oder entlang eines als Keilfahrspur 9 ausgebildeten Abschnitts der Anschlussfahrspur 6 variieren.

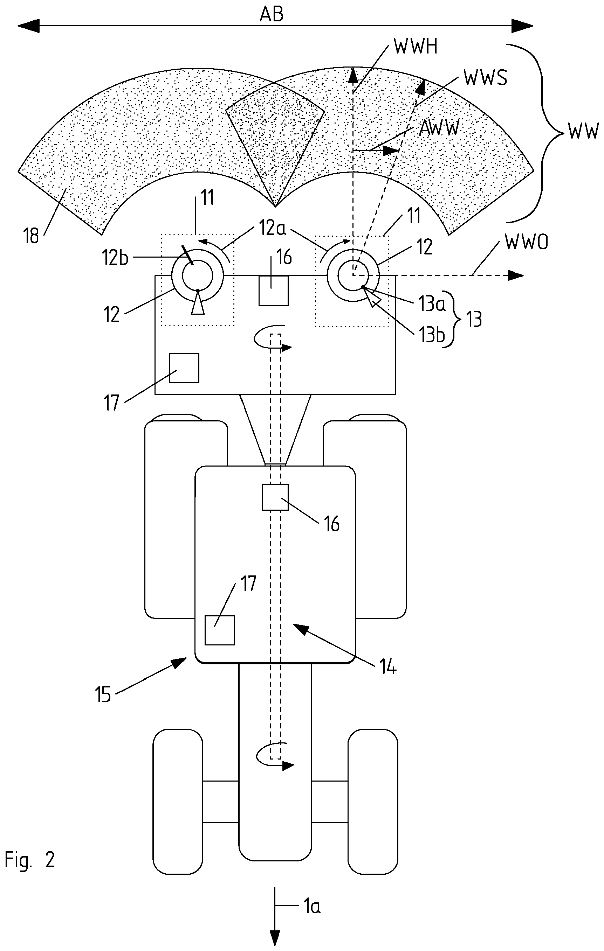

Wie die Fig. 2 erkennen lässt, ist der Schleuderstreuer 1 als Zweischeibenstreuer ausgebildet umfassend zwei separat ansteuerbare Streuscheibeneinheiten 11. Diese umfassen jeweils schematisch angedeutete Streuscheiben 12, die sich mit einer Drehzahl 12a in schematisch angedeuteter Richtung drehen, sowie Einleitsysteme 13 für Dünger mit schematisch angedeuteten Aufgabepunkten 13a auf die Streuscheiben 12 und Dosierungsorganen 13b.

Auf den Streuscheiben 12 sind Streuschaufeln 12b ausgebildet, die beispielsweise auf bekannte Weise hinsichtlich ihres Anstellwinkels verstellbar befestigt sind. Ebenso können die Streuschaufeln 12b Weichen (nicht dargestellt) umfassen, die den Dünger wahlweise zu unterschiedlich langen und/oder ausgerichteten äußeren Abschnitten der Streuschaufeln 12b lenken. Der Übersichtlichkeit halber ist nur eine einzige Streuschaufel 12b stark schematisiert angedeutet.

Die Aufgabepunkte 13a können in/entgegen der Drehrichtung der Streuscheiben 12 individuell verstellt werden, ebenso die mittels der Dosierungsorgane 13b jeweils eingeleitete Menge des Düngers. Die Drehzahlen 12a werden vorzugsweise für beide Streuscheibeneinheiten 11 gemeinsam an einer mechanischen Antriebseinheit 14 oder können bei einer hydraulischen Antriebseinheit 14 auch separat regelbar sein, beispielsweise an einem zugeordneten Schlepper 15.

Der Schleuderstreuer 1 und/oder der Schlepper 15 umfassen ferner wenigstens ein GPS-System 16 und wenigstens einen Bordcomputer 17 oder dergleichen Steuereinheit zum individuellen Ansteuern der Streuscheibeneinheiten 11.

Für das Arbeiten entlang der Feldfahrgassen 3 wird mittels der Streuscheiben 12 ein bezüglich der Fahrtrichtung 1a symmetrischer Normalstreufächer 18 hinter dem Schleuderstreuer 1 erzeugt. Der Normalstreufächer 18 kann anhand der vorgegebenen Arbeitsbreite AB und einer geeigneten Wurfweite WW charakterisiert werden, beispielsweise anhand einer der Fahrtrichtung 1a entgegengesetzten hinteren Wurfweite WWH, einer unter einem geeigneten Abwurfwinkel AWW definierten seitlichen Wurfweite WWS, einer seitlich orthogonal zur Fahrtrichtung 1a definierten orthogonalen Wurfweite WWO und/oder anhand anderweitiger zur Charakterisierung von Streufächern und Streubildern gebräuchlicher Parameter.

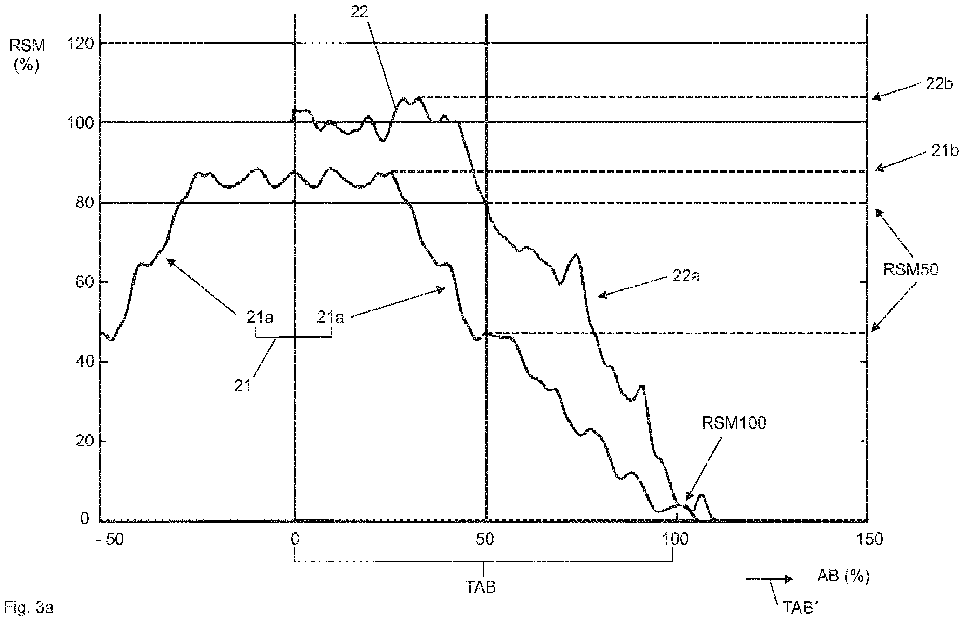

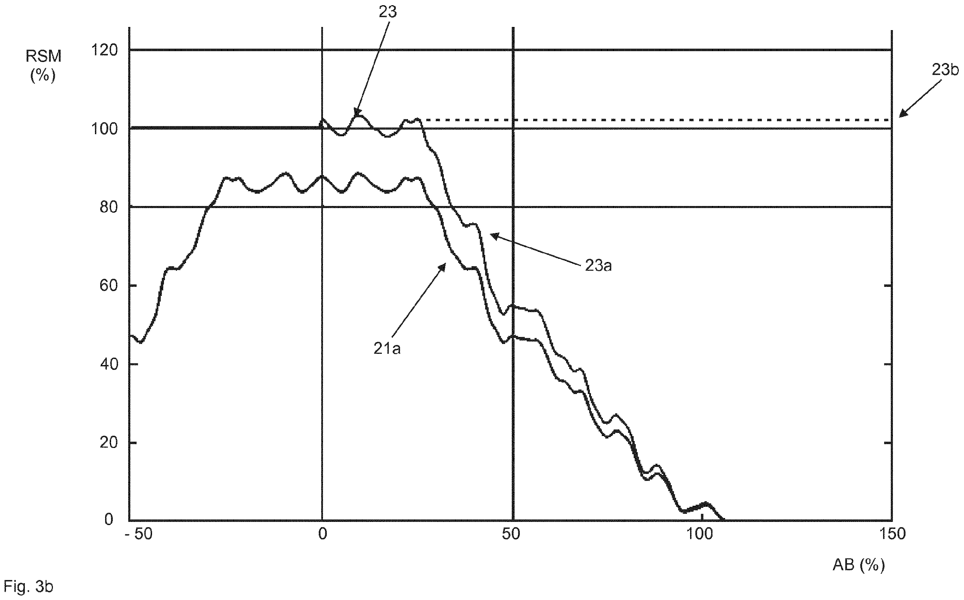

Wie die Fig. 3A und 3B erkennen lassen, resultiert aus dem Befahren einer einzelnen Feldfahrgasse 3 mit dem Normalstreufächer 18 ein bezüglich der Feldfahrgasse 3 ebenfalls achsensymmetrisches Normalstreubild 21 mit einer vorzugsweise annähernd dreieckigen Querverteilung des Düngers bezogen auf die vorgegebene Arbeitsbreite AB. Das Normalstreubild 21 setzt sich aus zwei identischen Streuflanken 21a zusammen, von denen nur eine vollständig dargestellt ist. Die (nicht dargestellte) Längsverteilung des Düngers entlang der Feldfahrgassen 3 ist im Feldinneren 2a im Wesentlichen konstant.

In der Fig. 3A ist ferner eine beim Befahren der Grenzgasse 4 dem Feldinneren 2a zugewandte innere Grenzstreuflanke 22a eines Grenzstreubilds 22 dargestellt. Die Grenzstreuflanke 22a ist gegenüber der entsprechenden Streuflanke 21a des Normalstreubilds 21 trapezförmig verzerrt. Ferner ist ein Maximum 22b der relativen Streumenge RSM, die beispielsweise auf eine vorgegebene Masse pro Flächeneinheit bezogen ist, im Grenzstreubild 22 größer als ein Maximum 21b der relativen Streumenge RSM im Normalstreubild 21.

Zum Vergleich ist in der Fig. 3B eine Streuflanke 23a eines Referenzstreubilds 23 gezeigt, dessen Maximum 23b der relativen Streumenge RSM ohne trapezförmige Verzerrung des Normalstreubilds 21 angehoben wurde. Das Referenzstreubild 23 ist somit lediglich hinsichtlich der relativen Streumenge RSM vertikal gegenüber dem Normalstreubild gespreizt.

Dagegen ist unter einer Änderung der Querverteilung im Sinne der vorliegenden Erfindung eine qualitative und trapezförmige Verzerrung oder Umverteilung der relativen Streumenge RSM in Querrichtung (in den Fig. 3A und 3B in horizontaler Richtung) zu verstehen.

Die trapezförmige Verzerrung oder Umverteilung lässt sich in der Fig. 3A durch Vergleich der bei der Hälfte (50%) der vorgegebenen Arbeitsbreite AB jeweils ausgebrachten relativen Streumengen RSM50 erkennen. In der Streuflanke 21a des Normalstreubilds 21 beträgt die relative Streumenge RSM50 etwa 43%. In der inneren Grenzstreuflanke 22a des Grenzstreubilds 22 beträgt die relative Streumenge RSM50 dagegen 80%.

Zum Erzeugen der inneren Grenzstreuflanke 22a hat sich eine Erhöhung der relativen Streumenge RSM50 (bei halber vorgegebener Arbeitsbreite AB) von wenigstens 20% gegenüber dem Normalstreubild 21 als wirksam herausgestellt. Besonders günstig ist eine Erhöhung um wenigstens 50%.

Wie die Fig. 3A ferner erkennen lässt, ändert sich eine relative Streumenge RSM100 bei 100% der vorgegebenen Arbeitsbreite AB in der Grenzstreuflanke 22a nur unwesentlich oder gar nicht gegenüber dem entsprechenden Wert im Normalstreubild 21. Das heißt, die aus der trapezförmigen Verzerrung des Normalstreubilds 21 resultierende innere Teilarbeitsbreite TAB der inneren Grenzstreuflanke 22a entspricht der Teilarbeitsbreite der entsprechenden Streuflanke 21a des Normalstreubilds 21.

Es wäre jedoch prinzipiell auch möglich, die innere Teilarbeitsbreite TAB im Grenzstreubild 22 zu erhöhen, also die innere Grenzstreuflanke 22a gegenüber der Streuflanke 21a in Querrichtung auf einen Wert TAB' zu spreizen. Dies kann als zusätzliche Maßnahme zur trapezförmigen Verzerrung wirkungsvoll sein, sofern die vorgegebene Arbeitsbreite AB in den Feldfahrgassen 3 nicht bereits maximiert wurde. Ebenso kann eine dynamisch variierende Reduzierung der inneren Teilarbeitsbreite TAB auf einen Wert TAB' im Zusammenwirken mit einer trapezförmigen Verzerrung der Grenzstreuflanke 22a vorteilhaft sein, siehe unten.

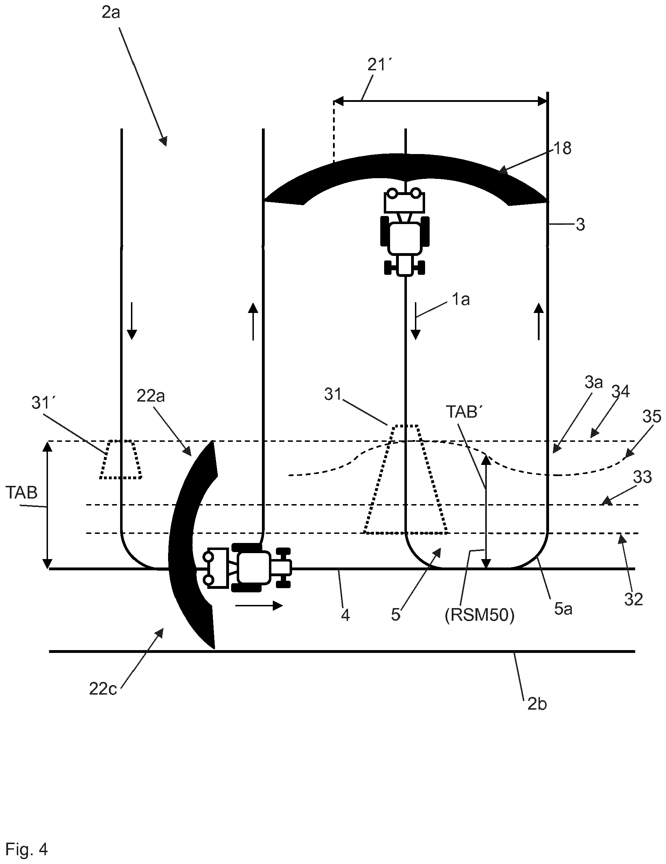

Die Fig. 4 verdeutlicht die Anwendung des Grenzstreubilds 22 beim Befahren der Grenzfahrgasse 4 im Bereich eines Vorgewendes 5. Demnach wird die Grenzfahrgasse 4 mit dem Grenzstreubild 22 umfassend die innere Grenzstreuflanke 22a und eine äußere Grenzstreuflanke 22c befahren. Die äußere Grenzstreuflanke 22c ist auf bekannte Weise trapezförmig an den Abstand zur Feldgrenze 2b angepasst, um eine Unterdüngung und einen Düngeraustrag über die Feldgrenze 2b hinaus zu vermeiden. Die innere Grenzstreuflanke 22a ist unabhängig davon trapezförmig ausgehend von einer der Streuflanken 21a des Normalstreubilds 21 verzerrt.

Zusätzlich gezeigt ist das normale Befahren einer Feldfahrgasse 3 unter Anwendung des Normalstreufächers 18 und somit des Normalstreubilds 21. Zum besseren Verständnis ist ein Teilbereich 21' des Normalstreubilds 21 bezeichnet, der den in den Fig. 3A und 3B von -50% bis +100% der vorgegebenen Arbeitsbreite AB gezeigten Streuflanken 21a entspricht.

Auch das Vorgewende 5 kann auf diese Weise befahren werden, allerdings mit einer bekannten zwischenzeitlichen Abschaltung oder Teilabschaltung des Normalstreubilds 21. Alternativ kann das Vorgewende 5 auch mit einem speziellen Vorgewende-Streubild (nicht dargestellt) befahren werden, bei dem beispielsweise die hintere Wurfweite WWH gegenüber dem Normalstreufächer 18 selektiv reduziert ist, um mit dem Streubild näher an die Grenzfahrgasse 4 heranzureichen.

Die Düngerverteilung im Bereich des Vorgewendes 5 ergibt sich dann aus der Überlappung der inneren Grenzstreuflanke 22a beim Befahren der Grenzfahrgasse 4 und dem Normalstreubild 21 oder einem speziellen Vorgewende-Streubild beim Befahren von Vorgewende-Fahrspuren 5a und/oder daran anschließender Bereiche 3a der Feldfahrgassen 3.

Durch Anwendung der inneren Grenzstreuflanke 22a lassen sich vom herkömmlichen Grenzfahren bekannte Unterdüngungsbereiche 31 entweder substantiell verkleinern, beispielsweise zu Unterdüngungsbereichen 31' (Unterdüngungsbereiche sind lediglich stark schematisiert angedeutet) oder gänzlich vermeiden.

Während die relative Streumenge RSM beim herkömmlichen Grenzfahren bereits bei etwa einem Drittel der vorgegebenen Arbeitsbreite AB, in der Fig. 4 entlang einer Linie 32, auf 80% der vorgegebenen Streumenge abfällt, sinkt die relative Streumenge RSM bei Anwendung der in der Fig. 3A dargestellten inneren Grenzstreuflanke 22a erst bei der Hälfte der Arbeitsbreite AB, in der Fig. 4 entlang der Linie 33, auf 80% der vorgegebenen Streumenge ab.

Anders gesagt bewirkt die Grenzfahrt mit der inneren Grenzstreuflanke 22a, dass eine zwischenzeitliche Abschaltung oder Teilabschaltung des Normalstreubilds 21 im Vorgewende 5 weiter entfernt von der Grenzfahrgasse 4 durchgeführt werden kann und/oder zu einer geringeren Unterdüngung im Bereich des Vorgewendes 5 führt.

Die Fig. 4 verdeutlicht ferner, dass die innere Teilarbeitsbreite TAB des Grenzstreubilds 22 während der Grenzfahrt sowohl konstant gehalten werden kann, in der Fig. 4 entlang einer Linie 34, als auch an den Abstand und/oder die Richtung der benachbarten Vorgewende-Fahrspuren 5a angepasst werden kann. Diese Anpassung führt zu einer dynamisch variierenden inneren Teilarbeitsbreite TAB' mit einem vorzugsweise wellenförmigen Verlauf entlang der Grenzfahrgasse 4, beispielhaft dargestellt durch eine Linie 35. Vorzugsweise weist der wellenförmige Verlauf dann pro Vorgewende-Fahrspur 5a je einen Wellenberg und ein Wellental auf.

Stattdessen oder ergänzend könnte auch das Ausmaß der trapezförmigen Verzerrung des Normalstreubilds 21 in der inneren Grenzstreuflanke 22a entsprechend variiert werden. Beispielsweise wäre eine dynamisch variierende Erhöhung der relativen Streumenge RSM50 zwischen 20% und 50% gegenüber dem Normalstreubild 21 denkbar. Auch diesbezüglich wäre ein wellenförmiger Verlauf in Anlehnung an die in der Fig. 4 gezeigte Linie 35 vorteilhaft.

Sowohl durch eine Variation der inneren Teilarbeitsbreite TAB als auch durch eine Variation der relativen Streumenge RSM50 kann die innere Grenzstreuflanke 22a bei der Grenzfahrt laufend an den Abstand der Grenzfahrgasse 4 zu benachbarten Vorgewende-Fahrspuren 5a und/oder an deren Verlauf bzw. Richtung angepasst werden. Zusätzlich ist eine entsprechende Variation der Düngerdosierung möglich.

Erfindungsgemäß kann wie folgt gearbeitet werden:
Die Grenzfahrt um das Feld 2 wird vorzugsweise, jedoch nicht zwingend, zu Beginn des Düngeraustrags vorgenommen. Hierbei wird im Bereich der Vorgewende 5 mit dem Grenzstreubild 22 umfassend die innere Grenzstreuflanke 22a und eine herkömmliche äußere Grenzstreuflanke 22c gearbeitet.

In Bereichen, in denen die Grenzfahrgasse 4 im regelmäßigen Abstand entsprechend der vorgegebenen Arbeitsbreite AB entlang einer Feldfahrgasse 3 verläuft, kann eine Streuflanke des Normalstreubilds 21 als innere Grenzstreuflanke verwendet werden.

Entlang einer Anschlussfahrspur 6 mit kleinerem Abstand als die Arbeitsbreite AB, beispielsweise einer Parallelfahrspur 8 oder Keilfahrspur 9, kann eine bezüglich der inneren Teilarbeitsbreite gestauchte Streuflanke des Normalstreubilds 21 als innere Grenzstreuflanke verwendet werden oder eine speziell an die Parallelfahrspur 8 oder Keilfahrspur 9 angepasste Streuflanke.

Durch herkömmliches Befahren des Vorgewendes 5 unter zwischenzeitlicher Abschaltung oder Teilabschaltung des Normalstreubilds 21 ergibt sich eine Streubildüberlappung mit obiger Grenzfahrt und durch Anwendung der inneren Grenzstreuflanke 22a ein besonders gleichmäßiger Düngeraustrag mit reduzierter Gefahr einer lokalen Unterdüngung im Vorgewende.

Der Wechsel zwischen den jeweils angewendeten Streubildern, insbesondere die Aktivierung / Deaktivierung der inneren Grenzstreuflanke 22a erfolgt vorzugsweise automatisch durch GPS-Steuerung mittels des GPS-System 16. Hierzu werden geeignete Positionsdaten des Felds 2 auf bekannte Weise vorgehalten und mit Ist-Positionsdaten des Schleuderstreuers 1 bzw. des zugehörigen Schleppers 15 verglichen.

Mittels des Bordcomputers 17 kann dann die jeweils dem Feldinneren 2a bzw. dem Vorgewende 5 zugewandte Streuscheibeneinheit 11 gezielt angesteuert werden, um die Grenzstreuflanke 22a einzustellen. Dies erfolgt beispielsweise durch Verstellen des Aufgabepunkts 13a am zugehörigen Einleitsystem 13. Zusätzlich können Drehzahl 12a und Dosierung des Düngers angepasst werden, gegebenenfalls auch gemeinsam mit der der äußeren Grenzstreuflanke 22c zugeordneten Streuscheibeneinheit 11.

## Patentansprüche

1. Verfahren zum Ausbringen von Dünger mit einem Schleuderstreuer (1), wobei beim normalen Befahren von Feldfahrgassen (3) im Feldinneren (2a) mit einem Normalstreubild (21) einer vorgegebenen Arbeitsbreite (AB) gearbeitet wird, wobei ferner eine Grenzfahrt entlang eines Vorgewendes (5) ausgeführt wird, und wobei man bei der Grenzfahrt mit einem Grenzstreubild (22) arbeitet, das sich in einer zum Feldinneren (2a) weisenden inneren Grenzstreuflanke (22a) vom Normalstreubild (21) hinsichtlich der Querverteilung des Düngers unterscheidet, **dadurch gekennzeichnet, dass** eine Streuflanke (21a) des Normalstreubilds (21) zum Erzeugen der inneren Grenzstreuflanke (22a) trapezförmig verzerrt wird.

2. Verfahren nach Anspruch 1, wobei eine Streuflanke (21a) des Normalstreubilds (21) zum Erzeugen der inneren Grenzstreuflanke (22a) quer gespreizt wird.

3. Verfahren nach einem der vorigen Ansprüche, wobei eine im seitlichen Abstand von 50% der Arbeitsbreite (AB) definierte Streumenge (RSM50) ausgehend von einer Streuflanke (21a) des Normalstreubilds (21) in der inneren Grenzstreuflanke (22a) erhöht wird, insbesondere um wenigstens 20%.

4. Verfahren nach wenigstens einem der vorigen Ansprüche, wobei die innere Grenzstreuflanke (22a) bei der Grenzfahrt laufend an den Abstand zwischen einer dabei befahrenen Grenzfahrgasse (4) und einer benachbarten Vorgewende-Fahrspur (5) und/oder die Richtung der Vorgewende-Fahrspur (5a) angepasst wird.

5. Verfahren nach wenigstens einem der vorigen Ansprüche, wobei ein Aufgabepunkt (13a) für den Dünger auf einer der inneren Grenzstreuflanke (22a) zugeordneten Streuscheibe (12) ausgehend vom normalen Befahren der Feldfahrgassen (3) in der Drehrichtung der Streuscheibe (12) zum Erzeugen der inneren Grenzstreuflanke (22a) verstellt wird.

6. Verfahren nach wenigstens einem der vorigen Ansprüche, wobei die Drehzahl (12a) einer der inneren Grenzstreuflanke (22a) zugeordneten Streuscheibe (12) ausgehend vom normalen Befahren der Feldfahrgassen (3) zum Erzeugen der inneren Grenzstreuflanke (22a) erhöht wird.

7. Verfahren nach wenigstens einem der vorigen Ansprüche, wobei wenigstens eine Streuschaufel (12b) an einer der inneren Grenzstreuflanke (22a) zugeordneten Streuscheibe (12) ausgehend vom normalen Befahren der Feldfahrgassen (3) zum Erzeugen der inneren Grenzstreuflanke (22a) verstellt oder selektiv zugeschaltet wird.

8. Verfahren nach wenigstens einem der vorigen Ansprüche, wobei die Dosierung des Düngers an einer der inneren Grenzstreuflanke (22a) zugeordneten Streuscheibe (12) ausgehend vom normalen Befahren der Feldfahrgassen (3) zum Erzeugen der inneren Grenzstreuflanke (22a) erhöht wird.

9. Verfahren nach wenigstens einem der vorigen Ansprüche, wobei das Grenzstreubild (22) automatisch mittels GPS-Steuerung aktiviert wird.

10. Schleuderstreuer (1) für Dünger mit zwei mittels eines Bordcomputers (17) getrennt einstellbaren Schleuderscheibeneinheiten (11), und mit einem GPS-System (16), wobei mittels des Bordcomputers (17) ein erster Betriebszustand zum Erzeugen eines Normalstreubilds (21) für normales Befahren innerer Feldfahrgassen (3) und wenigstens ein zweiter Betriebszustand zum Erzeugen eines Grenzstreubilds (22) für ein Befahren von Grenzfahrgassen (4) entlang eines Vorgewendes (5) aktiviert werden können, wobei der Bordcomputer (17) ausgebildet ist, das Grenzstreubild (22) anhand empfangener GPS-Daten und durch Ansteuern der dem Feldinneren (2a) zugewandten Schleuderscheibeneinheit (11) gemäß dem Verfahren nach wenigstens einem der vorigen Ansprüche einzustellen.

11. Schleuderstreuer nach Anspruch 10, wobei die Schleuderscheibeneinheiten (11) Einleitsysteme (13) umfassen, deren Aufgabepunkte (13a) sich vom Bordcomputer (17) gemäß dem Verfahren nach Anspruch 5 ansteuern lassen.

12. Schleuderstreuer nach Anspruch 10 oder 11, wobei die Schleuderscheibeneinheiten (11) Schleuderscheiben (12) umfassen, deren Drehzahl (12a) sich vom Bordcomputer (17) gemäß dem Verfahren nach Anspruch 6 einstellen lässt.

13. Schleuderstreuer nach Anspruch 12, wobei an den Schleuderscheiben (12) Schleuderschaufeln (12b) ausgebildet sind, die sich vom Bordcomputer (17) gemäß dem Verfahren nach Anspruch 7 ansteuern lassen.

14. Schleuderstreuer nach einem der Ansprüche 10 bis 13, wobei die Schleuderscheibeneinheiten (11) Dosierungsorgane (13b) für den Dünger umfassen, die sich vom Bordcomputer gemäß dem Verfahren nach Anspruch 8 ansteuern lassen.

## Claims

1. Method for distributing fertilizer with a centrifugal spreader (1), wherein, when normally passing over field tramlines (3) in the field interior (2a), a normal spreading pattern (21) of a predetermined working width (AB) is used, wherein furthermore a border travel along a headland (5) is carried out, and wherein use is made during the border travel of a border spray pattern (22) which, in an inner border spray flank (22a) facing the field interior (2a), differs from the normal spreading pattern (21) in respect of the transverse distribution of the fertilizer, **characterized in that** a spreading flank (21a) of the normal spreading pattern (21) is distorted trapezoidally in order to produce the inner border spreading flank (22a).

2. Method according to Claim 1, wherein a spreading flank (21a) of the normal spreading pattern (21) is spread transversely in order to produce the inner border spreading flank (22a).

3. Method according to either of the preceding claims, wherein a spreading quantity (RSM 50) defined at the lateral distance of 50% of the working width (AB) is increased, in particular by at least 20%, in the inner border spreading flank (22a) starting from a spreading flank (21a) of the normal spreading pattern (21).

4. Method according to at least one of the preceding claims, wherein, during the border travel, the inner border spreading flank (22a) is continuously adapted to the distance between a border tramline (4) passed over here and an adjacent headland lane (5) and/or to the direction of the headland lane (5a).

5. Method according to at least one of the preceding claims, wherein a feed point (13a) for the fertilizer to a spreading disc (12) assigned to the inner border spreading flank (22a) is adjusted from normally passing over the field tramlines (3) in the direction of rotation of the spreading disc (12) in order to produce the inner border spreading flank (22a).

6. Method according to at least one of the preceding claims, wherein the rotational speed (12a) of a spreading disc (12) assigned to the inner border spreading flank (22a) is increased from normally passing over the field tramlines (3) in order to produce the inner border spreading flank (22a).

7. Method according to at least one of the preceding claims, wherein at least one spreading blade (12b) on a spreading disc (12) assigned to the inner border spreading flank (22a) is adjusted or selectively switched on from normally passing over the field tramlines (3) in order to produce the inner border spreading flank (22a).

8. Method according to at least one of the preceding claims, wherein the metering of the fertilizer at a spreading disc (12) assigned to the inner border spreading flank (22a) is increased from normally passing over the field tramlines (3) in order to produce the inner border spreading flank (22a).

9. Method according to at least one of the preceding claims, wherein the border spreading pattern (22) is automatically activated by means of GPS control.

10. Centrifugal spreader (1) for fertilizer, comprising two centrifugal disc units (11) which are adjustable separately by means of an on-board computer (17), and comprising a GPS system (16), wherein a first operating state for producing a normal spreading pattern (21) for normally passing over inner field tramlines (3) and at least one second operating state for producing a border spreading pattern (22) for passing over border tramlines (4) along a headland (5) can be activated by means of the on-board computer (17), wherein the on-board computer (17) is designed to adjust the border spreading pattern (22) on the basis of GPS data which are received and by activating the centrifugal disc unit (11), which is assigned to the field interior (2a), according to the method according to at least one of the preceding claims.

11. Centrifugal spreader according to Claim 10, wherein the centrifugal disc units (11) comprise introducing systems (13), the feed points (13a) of which can be activated by the on-board computer (17) according to the method according to Claim 5.

12. Centrifugal spreader according to Claim 10 or 11, wherein the centrifugal disc units (11) comprise centrifugal discs (12), the rotational speed (12a) of which can be adjusted by the on-board computer (17) according to the method according to Claim 6.

13. Centrifugal spreader according to Claim 12, wherein centrifugal blades (12b) are formed on the centrifugal discs (12) and can be activated by the on-board computer (17) according to the method according to Claim 7.

14. Centrifugal spreader according to one of Claims 10 to 13, wherein the centrifugal disc units (11) comprise metering members (13b) for the fertilizer, which metering members can be activated by the on-board computer according to the method according to Claim 8.

## Revendications

1. Procédé d'épandage d'engrais à l'aide d'un épandeur centrifuge (1), sachant qu'en situation de passage normal dans les couloirs du champ (3) à l'intérieur du champ (2a), on travaille avec une image d'épandage normal (21) d'une largeur de travail (AB) prédéfinie, sachant qu'en outre une conduite en limite est configurée le long d'une fourrière (5) et que l'on travaille avec une image d'épandage en limite (22) en situation de conduite en limite, cette image se distinguant de l'image d'épandage normal (21) dans un côté d'épandage en limite (22a) intérieur orienté vers l'intérieur du champ (2a) pour ce qui est de la répartition transversale de l'engrais, **caractérisé en ce qu'**un côté d'épandage (21a) de l'image d'épandage normal (21) est biaisé en forme de trapèze pour produire le côté d'épandage en limite (22a) intérieur.

2. Procédé selon la revendication 1, un côté d'épandage (21a) de l'image d'épandage normal (21) étant étalé transversalement pour réaliser le côté d'épandage en limite (22a) intérieur.

3. Procédé selon l'une quelconque des revendications précédentes, une quantité d'épandage (RSM50) définie à distance latérale de 50 % de la largeur de travail (AB) étant augmentée en partant d'un côté d'épandage (21a) de l'image d'épandage normal (21) dans le côté d'épandage en limite (22a) intérieur, notamment d'au moins 20 %.

4. Procédé selon au moins l'une quelconque des revendications précédentes, le côté d'épandage en limite (22a) intérieur étant adapté en situation de conduite en limite en passant à la distance présente entre un couloir en limite (4) actuellement emprunté et une voie de circulation de fourrière (5) connexe et/ou la direction de la voie de circulation de fourrière (5a) est adaptée.

5. Procédé selon au moins l'une quelconque des revendications précédentes, un point de distribution (13a) de l'engrais sur un disque d'épandage (12) associé au côté d'épandage en limite (22a) intérieur pouvant être réglé dans la direction de rotation du disque d'épandage (12) en partant du passage normal dans les couloirs du champ (3) pour produire le côté d'épandage en limite (22a) intérieur.

6. Procédé selon au moins l'une quelconque des revendications précédentes, la vitesse de rotation (12a) d'un disque d'épandage (12) associé au côté d'épandage en limite (22a) intérieur en partant du passage normal dans les couloirs du champ (3) est augmentée pour réaliser le côté d'épandage en limite (22a) intérieur.

7. Procédé selon au moins l'une quelconque des revendications précédentes, au moins une pelle d'épandage (12b) étant connectée de façon réglable ou sélective au niveau d'un disque d'épandage (12) associé au côté d'épandage en limite (22a) intérieur en partant du passage normal dans les couloirs du champ (3) pour réaliser le côté d'épandage en limite (22a) intérieur.

8. Procédé selon au moins l'une quelconque des revendications précédentes, le dosage de l'engrais étant augmenté au niveau d'un disque d'épandage (12) associé au côté d'épandage en limite (22a) intérieur en partant du passage normal dans les couloirs du champ (3) pour réaliser le côté d'épandage en limite (22a) intérieur.

9. Procédé selon au moins l'une quelconque des revendications précédentes, l'image d'épandage en limite (22) étant automatiquement activée par le biais d'une commande par GPS.

10. Épandeur centrifuge (1) pour engrais avec deux unités de disque d'épandage (11) réglables séparément à l'aide d'un ordinateur de bord (17) et avec un système GPS (16), un premier état de fonctionnement pouvant être activé à l'aide de l'ordinateur de bord (17) pour produire une image d'épandage normal (21) pour le passage normal dans les couloirs intérieurs du champ (3) et au moins un deuxième état de fonctionnement pouvant être activé pour produire une image d'épandage en limite (22) pour un passage dans des couloirs en limite (4) le long d'une fourrière (5), l'ordinateur de bord (17) étant conçu pour régler l'image d'épandage en limite (22) à l'aide des données GPS reçues en commandant l'unité de disque d'épandage (11) orientée vers l'intérieur du champ (2a) selon le procédé selon au moins l'une quelconque des revendications précédentes.

11. Épandeur centrifuge selon la revendication 10, les unités de disque d'épandage (11) comprenant des systèmes de déclenchement (13) dont les points de distribution (13a) sont commandés par l'ordinateur de bord (17) selon le procédé selon la revendication 5.

12. Épandeur centrifuge selon la revendication 10 ou 11, les unités de disque d'épandage (11) comprenant des disques d'épandage (12) dont la vitesse de rotation (12a) est réglée par l'ordinateur de bord (17) selon le procédé selon la revendication 6.

13. Épandeur centrifuge selon la revendication 12, des pelles d'épandage (12b) étant réalisées au niveau des disques d'épandage (12), ces pelles étant commandées par l'ordinateur de bord (17) selon le procédé selon la revendication 7.

14. Épandeur centrifuge selon l'une quelconque des revendications 10 à 13, les unités de disque d'épandage (11) comprenant des organes de dosage (13b) pour l'engrais, ces organes étant commandés par l'ordinateur de bord selon le procédé selon la revendication 8.
